# EUROPEAN PATENT APPLICATION

(11) **EP 1 313 293 A2**
(43) Date of publication of application: **21.05.2003**
(21) Application number: 02257959.3
(22) Date of filing: 19.11.2002
(51) Int. Cl.: H04L 29/06

(54) **Client-side RTP stack**

(30) Priority: 20.11.2001 US 990225
(71) Applicant: Sun Microsystems, Inc., Santa Clara, California 95054 (US)
(72) Inventor: Owerfeldt, Marc, Sunnyvale, California 94086 (US)
(74) Representative: Collins, John David

(57) **Abstract**

An invention is provided for an RTP stack (304) capable of deployment in a small device, such as a PDA, having restrictive memory requirements. The RTP stack includes a receiver module capable of receiving data via an underlying transport layer (404), and a small device profile (406) that defines a bandwidth fraction for RTCP control data to be less than five percent, down to zero. Hence, the RTP stack can avoid processing RTCP data and transmitting RTP data. As a result, using the embodiments of the present invention, a small device RTP stack can be implemented to have a footprint of about 50-60KB.

## Description

### BACKGROUND OF THE INVENTION

### 1. Field of the Invention

The present invention relates generally to real-time multimedia streaming, and more particularly to a real-time protocol stack.

### 2. Description of the Related Art

With the explosive growth of the Internet, there is a growing interest in using the Internet and other Internet protocol-based networks to deliver multimedia selections, such as audio and video material. Scalable, open-architecture multimedia systems are being used to store and retrieve multimedia data over the Internet. Interactive television, movies on demand, and other multimedia technologies are among the more promising applications for use on these systems.

The Internet is a wide area network offering best effort delivery service. Packets of data are routed as datagrams that carry the address of the intended recipient. A specific connection between the sender and the recipient is not required because all the host nodes on the network include the inherent capability to route datagrams from node to node until delivery is effected. This datagram packet delivery scheme is constructed as a best effort delivery system in which the delivery of datagram packets is not guaranteed.

In many cases, multimedia data requires real-time delivery. In the case of audio or video data, the data stream representing a particular media selection needs to be delivered in the proper sequence and within an abbreviated time period, to allow the user to play back the audio or video selection as it is being sent. The Real-Time Transport Protocol (RTP) is a current de facto standard for delivering real-time content over the Internet or other networks. In the case of an Internet Protocol (IP) based network such as the Internet, RTP utilizes the User Datagram Protocol (UDP) over IP for transport. The term RTP generally refers to two complementary protocols, RTP and Real-Time Control Protocol (RTCP). RTP specifies how to carry data that has real-time properties, while RTCP monitors the quality of service (QoS) and conveys information concerning the participants in an on-going session.

Recently, the computer industry has sought to add computer processing and communications capabilities to devices other than what would normally be considered a traditional computer. Such devices are quite varied and include, for example, personal digital assistants (PDAs), smartphones, cellular phones, desktop screen phones, in-vehicle devices, vehicle traffic lights, kiosks, business organizers (e.g., IBM WorkPadT.TM., PalmPilot.TM., and the like), computer peripherals (such as printers, fax machines, and the like), handheld or palmtop computing devices, and the like. For convenience, these devices, as a class, are referred to herein as "small device" clients as they are devices that are designed to be connected to servers in a computer network and used for computing purposes regardless of their location, and as such require applications to have a reduced footprint.

However, these small devices are often unable to run many real-time content media applications because conventional RTP stacks require a larger footprint than small devices can accommodate. Although desktop computers are designed to handle the large processing and memory requirements of streaming media RTP stacks, most small devices do not have the processing power or memory demanded by conventional RTP stacks.

The footprint of a conventional full RTP stack implementation is of significant proportions. For example, a typical RTP stack implementation comprises in excess of ten thousand lines of code, requiring in more than 234 kilobytes (KB) of memory. In addition, when using Java, a convention RTP application programming interface (API) can add an additional 44 KB of required memory to the RTP implementation. At about 278 KB, a conventional full RTP stack implementation is too large to be deployed in small devices, which have restrictive memory requirements.

In view of the foregoing, there is a need for an RTP stack that can be utilized in small devices. The RTP stack should be capable of operating on small devices having reduced processing capability, such as cell phones, PDAs, and Java-enabled car "Telematics."

### SUMMARY OF THE INVENTION

Broadly speaking, embodiments of the present invention fill these needs by providing an RTP stack having a small footprint, which is capable of being deployed in small devices having restrictive memory requirements. More specifically, the embodiments of the present invention reduce the RTCP bandwidth fraction to less than 5 percent, down to zero, thus allowing the RTP stack to operate without RTCP processing requirements. Hence, an RTP stack disclosed in one embodiment of the present invention includes a receiver module capable of receiving data via an underlying transport layer, and a small device profile that defines a bandwidth fraction for RTCP control data to be less than five percent.

Another RTP stack is disclosed in a further embodiment. The RTP stack includes a manager module that manages operations performed by the RTP stack, and a connector module that receives data from an underlying transport layer. The connector module also processes the received data to create an input stream. A receiver module is also included that receives the input stream from the connector module. The RTP stack further includes a small device profile, which defines the bandwidth fraction for RTCP control data to be less than five percent.

In a further embodiment of the present invention, another RTP stack is disclosed. This embodiment includes a transport-independent tasks module in communication with a connector module. The transport-independent tasks module includes methods that are independent of the underlying transport layer, and the connector module includes methods that are dependent on the underlying transport layer. As above, a small device profile is also included. This small device profile defines the bandwidth fraction for RTCP control data to be zero. Hence, the RTP stack can avoid processing RTCP data and transmitting RTCP data. As a result, using the embodiments of the present invention, a small device RTP stack can be implemented in Java to have a footprint of about 50-60 KB. Other aspects and advantages of the invention will become apparent from the following detailed description, taken in conjunction with the accompanying drawings, illustrating by way of example embodiments of the invention.

### BRIEF DESCRIPTION OF THE DRAWINGS

Embodiments of the invention, together with further advantages thereof, may best be understood by reference to the following description taken in conjunction with the accompanying drawings in which:
Figure 1 is a diagram showing small device real-time multimedia system, in accordance with an embodiment of the present invention;
Figure 2 is a block diagram showing an RTP packet for use in a UDP/IP stack;
Figure 3 is a block diagram showing a small device RTP based multimedia system, in accordance with an embodiment of the present invention;
Figure 4 is a block diagram showing a small device RTP stack, in accordance with an embodiment of the present invention;
Figure 5 is a block diagram showing an RTP connector, in accordance with an embodiment of the present invention;
Figure 6 is a block diagram illustrating internal methods of a small device RTP stack, in accordance with an embodiment of the present invention;
Figure 7 is a block diagram showing an exemplary small device RTP stack implementation, in accordance with an embodiment of the present invention; and
Figure 8 is a block diagram of an exemplary computer system for carrying out the processing according to an embodiment of the present invention.

### DETAILED DESCRIPTION OF THE PREFERRED EMBODIMENTS

Embodiments of the invention are disclosed for a small device RTP stack. By reducing the RTCP bandwidth fraction to zero, embodiments of the present invention can remove code associated with RTCP control data from the small device RTP stack. As a result, the small device RTP stack of the embodiments of the present invention can be implemented to have a footprint less than one-fifth the size of a conventional RTP stack. In the following description, numerous specific details are set forth in order to provide a thorough understanding of embodiments of the present invention. It will be apparent, however, to one skilled in the art that embodiments may be practiced without some or all of these specific details. In other instances, well known process steps have not been described in detail in order not to unnecessarily obscure the embodiments of the present invention.

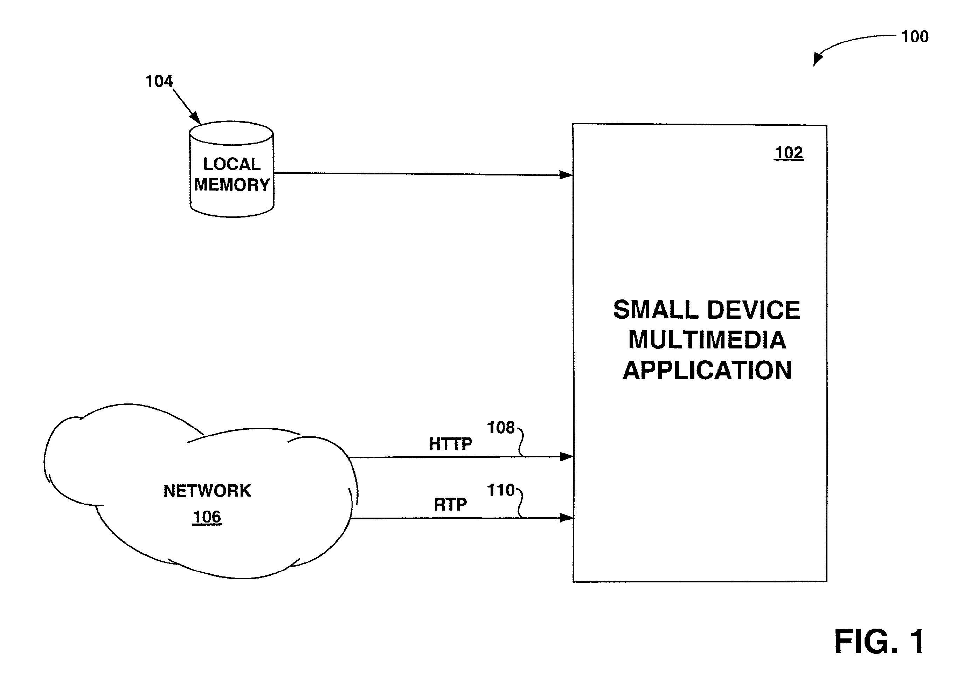

Figure 1 is a diagram showing small device real-time multimedia system 100, in accordance with an embodiment of the present invention. The small device real-time multimedia system 100 includes a small device multimedia application 102 and illustrates sources from which the small device multimedia application 102 can receive data. These sources include local memory 104 and a network 106, such as the Internet. When the source is a network 106, the transport protocol can vary, for example, the data can be received using HTTP 108 or RTP 110.

When the data source is in direct communication with the small device multimedia application 102, such as in the case of the local memory 104, it is a relatively simple matter to receive, decode, and process the data. However, when multimedia data is received via a network 106, the mechanics of receiving and processing the data packets is more complex. Although HTTP is a generally accepted protocol for use in transmitting non-real-time data such as web pages, HTTP 108 generally does not perform well when used for real-time data transmission. In these situations, RTP 110 generally is used for receiving multimedia data packets.

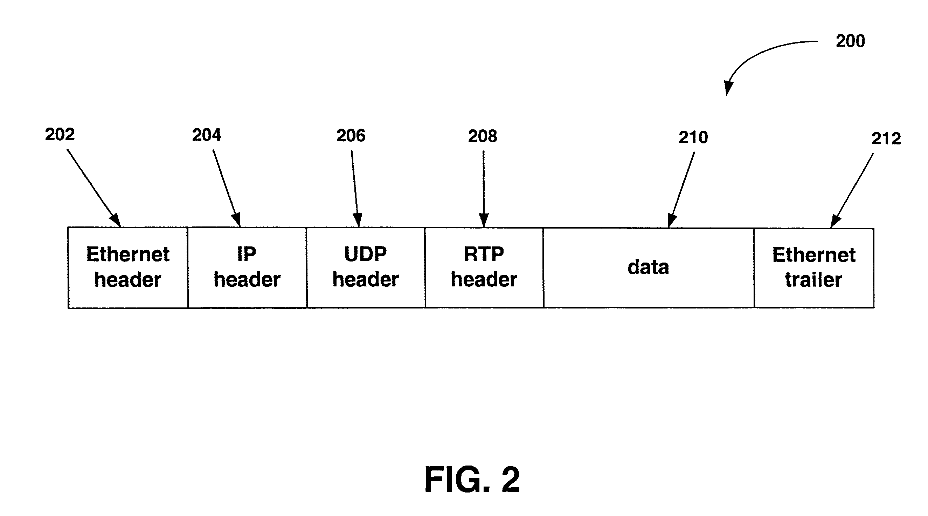

RTP is a protocol that supports real-time transmission of voice and video. Figure 2 is a block diagram showing an RTP packet 200 for use in a UDP/IP stack. The RTP packet 200 includes an Ethernet header 202, an IP header 204, a User Datagram Protocol (UDP) header 206, an RTP header 208, data 210, and an Ethernet trailer 212. Although Figure 2 illustrates an RTP packet 200 that operates using a UDP/IP stack, it should be noted that the embodiments of the present invention can be used with any type of stack. It should also be noted that the RTP packet 200 can be used with any type of layer 2 protocol. For exemplary purposes the RTP packet 200 is shown for use with the Ethernet protocol. When used in a UDP/IP stack, the RTP packet 208 generally is created first and then the packet is moved down the stack to UDP and IP.

The RTP packet 200 rides on top of UDP and can include timestamping information in the RTP header 208 for proper reassembly at the receiving end. RTCP is a companion protocol that is used to maintain Quality of Service (QoS). RTP transmitters, receivers, mixers and translators periodically send each other RTCP packets that include information such as interarrival jitter and transmission delays, which allow analysis of the condition of the network and the quality of service, for example, by computing round-trip times.

As mentioned above, small devices are often unable to run many real-time content media applications because conventional RTP stacks require a larger footprint than small devices can accommodate. Although desktop computers are designed to handle the large processing and memory requirements of streaming media applications, most small devices do not have the processing power or memory demanded by these applications.

The footprint of a conventional full RTP implementation in Java is of significant proportions. As mentioned previously, a typical RTP API and implementation comprises in excess of ten thousand lines of code, requiring greater than 278 KB of memory, which is too large to be deployed in small devices having restrictive memory requirements. The embodiments of the present invention address this issue by providing a small device RTP stack.

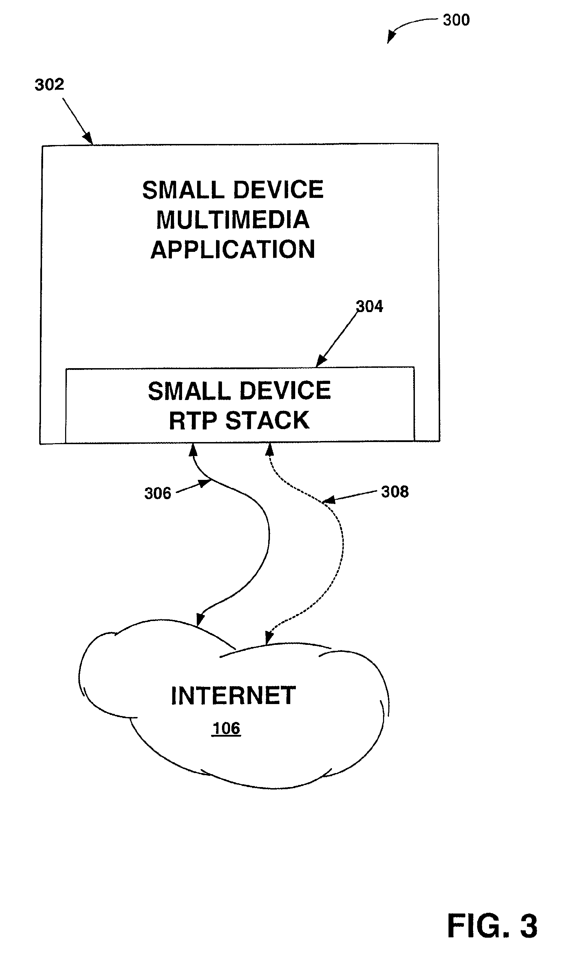

Figure 3 is a block diagram showing a small device RTP based multimedia system 300, in accordance with an embodiment of the present invention. The small device multimedia system 300 includes a small device multimedia application 302 having a small device RTP stack 304, which facilitates real-time streaming via the network 106, such as the Internet. Generally, an RTP stack receives both RTP data packets 306 and RTCP control packets 308 during operation. However, embodiments of the present invention set the RTCP 308 bandwidth fraction to zero, thus allowing the small device RTP stack 304 to avoid processing RTCP data, which reduces related code requirements and implementation size.

Hence, embodiments of the present invention receive and process RTP data packets 306, while ignoring RTCP control packets 308. As a result, the embodiments of the present invention can omit functionality associated with RTCP data processing. The reduced functionality allows the embodiments of the present invention to be implemented with a reduced function set, which greatly reduces the footprint of the small device RTP stack 304. In this manner, the embodiments of the present invention can be utilized to provide real-time media to small devices having restrictive memory requirements.

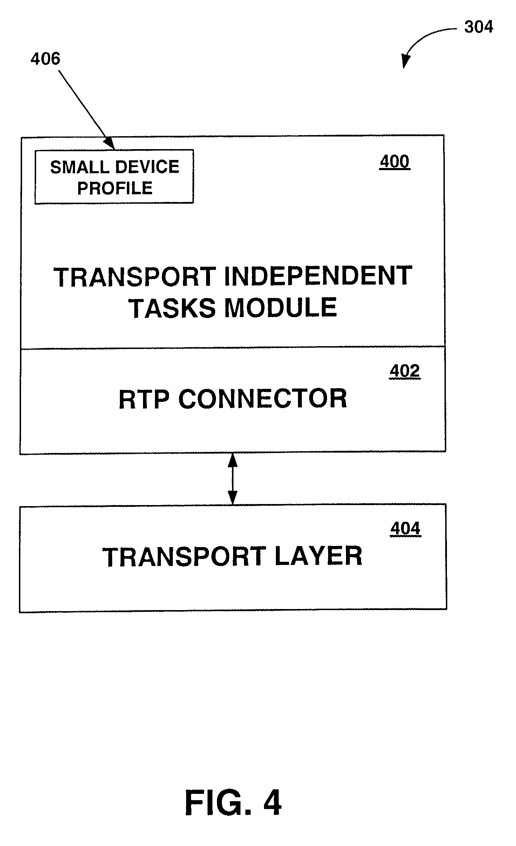

Figure 4 is a block diagram showing a small device RTP stack 304, in accordance with an embodiment of the present invention. The small device RTP stack 304 includes a transport-independent tasks module 400 having a small device profile 406, and an RTP connector 402, which facilitates communication with the transport layer 404. Although the embodiments of the present invention are described using a transport-independent tasks module 400 and an RTP connector 402, it should be noted that the small device RTP stack of the embodiments of the present invention can also be implemented in a transport dependent manner, thus avoiding the need for a separate RTP connector 402.

The transport-independent tasks module 400 includes the truly transport-independent tasks utilized during RTP streaming. For example, these transport-independent tasks can include packetization, depacketization, session management, and other transport-independent tasks as will be apparent to those skilled in the art. The small device profile 406 provides information specific to a particular environment in which the small device RTP stack is implemented. In particular, the small device profile 406 defines the amount of bandwidth to use for the data reception (RTP) verses the control protocol (RTCP).

Conventional profiles, such as the audio video profile (AVP) defined in IETF/RFC 1889, specify at least 5 percent of the bandwidth to be allocated for control messages, which is the RTCP portion of the protocol. However, the embodiments of the present invention reduce the bandwidth fraction for RTCP control messages to less than five percent. In particular, embodiments of the present invention reduce the bandwidth fraction for RTCP control messages to zero. As mentioned above, embodiments of the present invention receive and process RTP data packets, while ignoring RTCP control packets. As a result, the embodiments of the present invention can omit functionality associated with RTCP, which allows the embodiments of the present invention to be implemented with a reduced function set that greatly reduces the footprint of the small device RTP stack 304.

To achieve transport independence, embodiments of the present invention can use an RTP connector 402, which includes the transport-dependent tasks utilized during RTP streaming via the transport layer 404. These transport-dependent tasks can include transmission tasks, data receiving tasks, and other transport-dependent tasks as will be apparent to those skilled in the art. The RTP connector 402 can be used to adapt the small device RTP stack 304 to any type of transport layer.

The transport-independent tasks module 400 acts as a data sink for the application it is servicing. In this manner, the application program using the small device RTP stack 304 can be designed to communicate with the transport-independent tasks module 400 without regard to the specific type of network transport protocol that will be used with the system. Similarly, the transport-independent tasks module 400 communicates with the RTP connector 402 without regard to the specific protocol used for the transport 404. In particular, the transport-independent tasks module 400 receives data from the RTP connector 402 in the same manner, regardless of the specific protocol used for the transport 404.

Hence, embodiments of the present invention can provide a default RTP connector 402 for use with a particular type of transport, for example, an IP-based network. When needed, a new RTP connector 402 can be designed as a class for use over another transport, such as ATM. By passing the new ATM RTP connector class to an initialization method, the new ATM RTP connector class can be implemented.

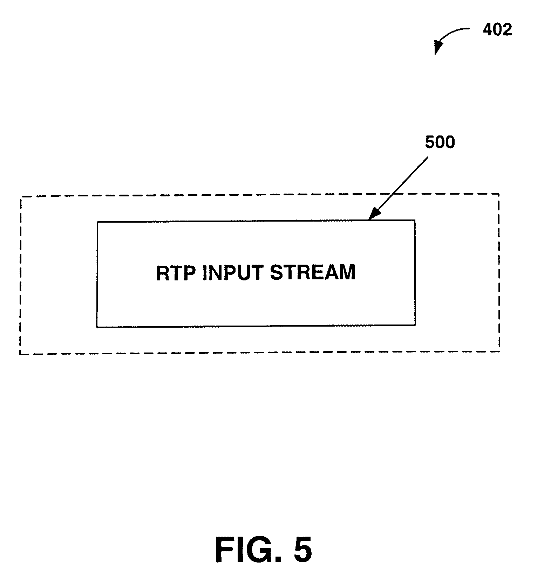

Figure 5 is a block diagram showing an RTP connector 402, in accordance with an embodiment of the present invention. As mentioned above, embodiment of the present invention can use the RTP connector 402 to achieve transport independence. The RTP connector 402 includes an RTP input stream method 500 for reading from the transport layers. Specifically, the RTP input stream method 500 returns an input stream to receive RTP data from the network via the transport layers.

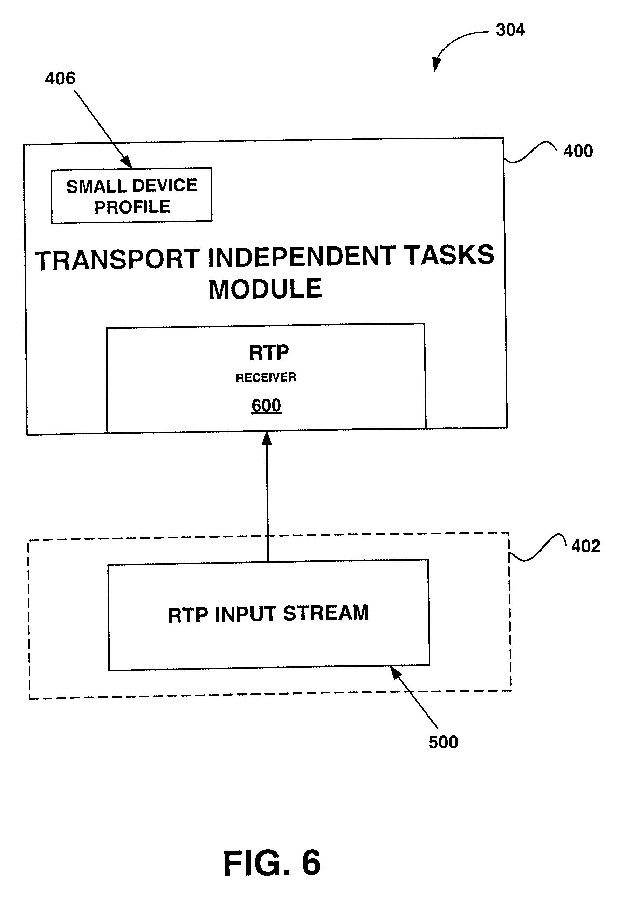

To bring data into a program, a Java program opens a stream to a data source and reads the information serially. Thus, using the RTP input stream method, the transport-independent tasks module 400 can read RTP data from the network regardless of the actual transport being used. As above, although the embodiments of the present invention have been described using an RTP connector 402, it should be noted that the small device RTP stack of the embodiments of the present invention can also be implemented in a transport dependent manner, thus avoiding the need for the RTP connector 402. However, using the RTP connector 402, the embodiments of the present invention reduce the transport-dependent tasks to an RTP input method. As a result, data generated by the RTP input method can be processed in general terms, rather than in complex, network-specific terms, as discussed in greater detail next with reference to Figure 6.

Figure 6 is a block diagram illustrating internal methods of a small device RTP stack 304, in accordance with an embodiment of the present invention. The small device RTP stack 304 includes an RTP connector 402 and a transport-independent tasks module 400 having a small device profile 406. As discussed previously, the transport-independent tasks module 400 includes the truly transport-independent tasks utilized during RTP streaming. For example, these transport-independent tasks can include packetization, depacketization, and session management. In addition, the transport-independent tasks module 400 includes an RTP receiver module 600, discussed in greater detail below.

The RTP connector 402 includes the transport-dependent tasks utilized during RTP streaming via the transport. As mentioned previously, the transport-dependent tasks include a fundamental method for reading from the transport layer. Specifically, the RTP connector 402 includes an RTP input stream method 500, which allows the RTP connector 402 to adapt the small device RTP stack 304 to any type of transport layer. In operation, the RTP receiver module 600 receives an RTP stream from the network regardless of the actual transport being used via the RTP input stream method 500. In particular, the RTP input stream method 500 returns an input stream to the RTP receiver module 600, which uses the input stream to receive RTP data from the network in a transport-independent manner, rather than using complex, network-specific operations.

As mentioned previously, embodiments of the present invention utilize a small device profile 406 to provide information specific to a particular environment in which the small device RTP stack 304 is implemented. Further, the small device profile 406 defines the amount of bandwidth to use for the data reception (RTP) verses the control protocol (RTCP). In particular, the small device profile 406 defines the amount of bandwidth to use for the control protocol (RTCP) to zero.

Hence, embodiments of the present invention receive and process RTP data packets, while ignoring RTCP control packets. As such, the embodiments of the present invention can omit RTP stack functionality that is associated with RTCP. The reduced functionality allows the embodiments of the present invention to be implemented with a reduced function set, which greatly reduces the footprint of the small device RTP stack. As a result, a small device RTP stack 304 of an embodiment of the present invention can be implemented using an API comprising six class interfaces. These classes include an RTP Manager class, an RTP Stream class, an RTP Connector class, a Receive Stream Event class, and a Receive Stream Listener class.

The RTP Connector class has been discussed previously. The RTP Manager class provides instantiation of an RTP session, which includes initialization and starting of the RTP session. To reduce the footprint of the small device RTP stack 304, code that manages or handles RTCP data can be excluded from the RTP Manager class. The RTP Stream class provides an object that represents a stream received within an RTP session. Thus, when a stream is detected, a new RTP Stream object is instantiated based on the RTP Stream class.

The RTP Manager class allows an application developer to register dynamic payload types with the application. Although a plurality of static payloads are well defined, such as H.263, new payload types can emerge that are not well defined. The RTP Manager class allows these new payload types to be dynamically registered with the system, thus allowing the new payload to be utilized. The Receive Stream Event class provides an event object that informs the system that a new RTP stream has been received. When a new stream is received, the Receive Stream Event class provides an event that includes the handle of the new stream, which is then utilized for further stream processing. These events are detected by the Receiver Stream Listener class, which awaits new streams and notifies the system of the new stream by throwing a Receive Stream Event. In this manner, the embodiments of the present invention can be utilized to provide real-time media to small devices having restricted memory requirements.

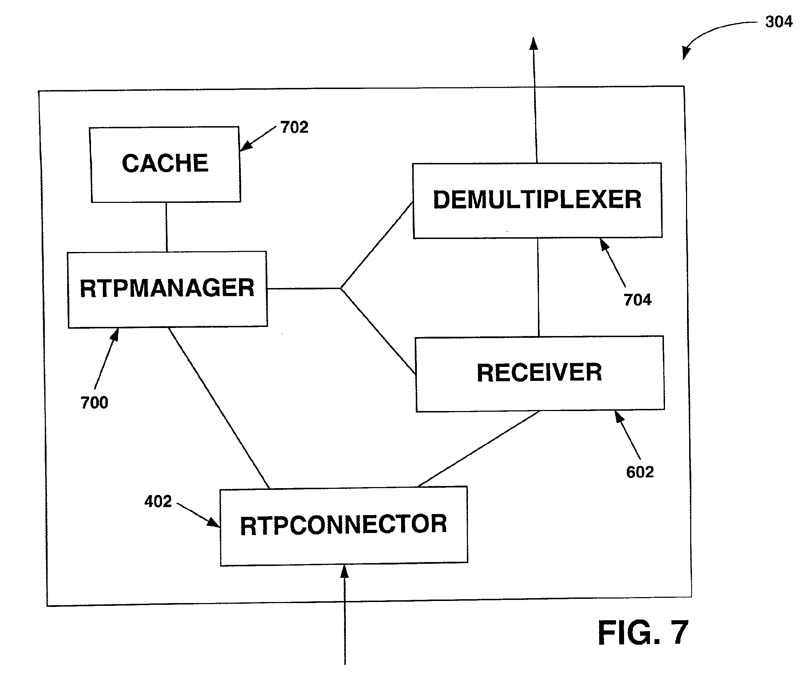

Figure 7 is a block diagram showing an exemplary small device RTP stack implementation 304, in accordance with an embodiment of the present invention. The exemplary small device RTP stack implementation 304 implements the above API and includes an RTPManager 700, a cache 702, a demultiplexer 704, a receiver 602, and an RTPConnector 402. Broadly speaking, the RTPConnector 402 receives real-time data from the transport layer and provides the received data to the receiver 602, which transfers the data to the demultiplexer 704. These operations and others are managed by RTPManager 700, which is assisted by the cache 702.

More specifically, the cache 702 stores session specific data, such as stream information for use by the RTPManager 700. As mentioned above, the RTPManager 700 provides control for the small device RTP stack 304, creates new instances of the RTPManager 700, and initializes the sessions. The actual RTP stream data is received from the transport layer using the RTPConnector 402, as described previously with reference to Figure 6. The RTPConnector 402 sends the stream data to the receiver 602, which parses, validates, processes, and transfers the audio and video payload data to the demultiplexer 704. The demultiplexer 704 demultiplexes the RTP streams and transfers the packets to the next high layer within the system, for example, to a small device multimedia application for rendering or further processing.

Thus, using the embodiments of the present invention, a small device RTP stack can be implemented in Java to have a footprint of about 50 KB. Compared to conventional RTP stack footprints, which are about 278 KB, the embodiments of the present invention can provide a small device RTP stack that is less than one-fifth the size of conventional RTP stacks.

Embodiments of the present invention may employ various computer-implemented operations involving data stored in computer systems to drive computer software, including application programs, operating system programs, peripheral device drivers, etc. These operations are those requiring physical manipulation of physical quantities. Usually, though not necessarily, these quantities take the form of electrical or magnetic signals capable of being stored, transferred, combined, compared, and otherwise manipulated. Further, the manipulations performed are often referred to in terms, such as producing, identifying, determining, or comparing.

Any of the operations described herein that form part of the embodiments of the invention are useful machine operations. The invention also relates to a device or an apparatus for performing these operations. The apparatus may be specially constructed for the required purposes, or it may be a general purpose computer selectively activated or configured by a computer program stored in the computer. In particular, various general purpose machines may be used with computer programs written in accordance with the teachings herein, or it may be more convenient to construct a more specialized apparatus to perform the required operations. An exemplary structure for an embodiment of the invention is described below.

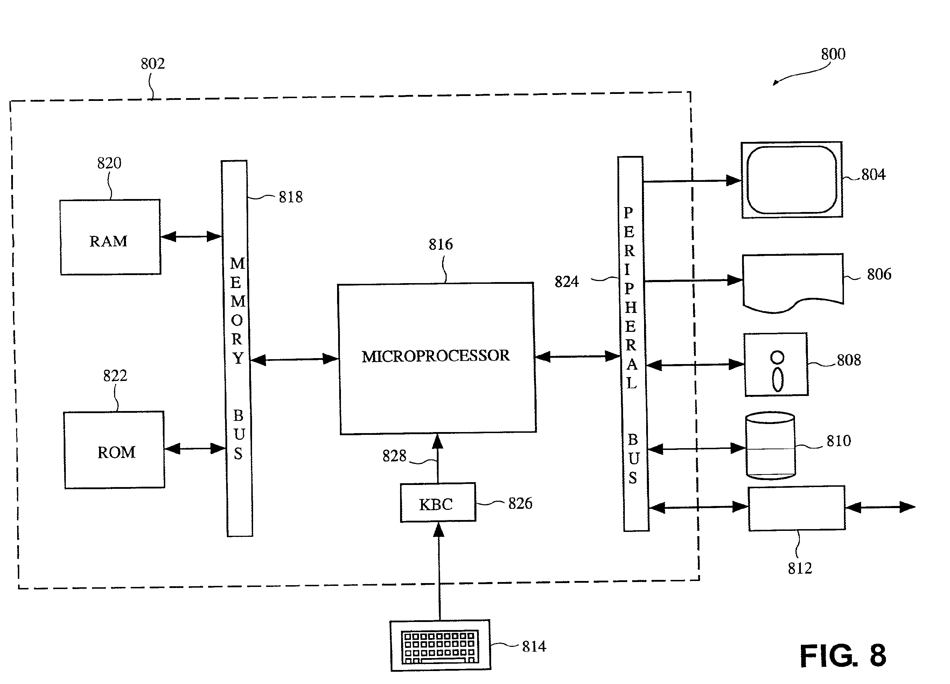

Figure 8 is a block diagram of an exemplary computer system 800 for carrying out the processing according to an embodiment of the invention. The computer system 800 includes a digital computer 802, a display screen (or monitor) 804, a printer 806, a floppy disk drive 808, a hard disk drive 810, a network interface 812, and a keyboard 814. The digital computer 802 includes a microprocessor 816, a memory bus 818, random access memory (RAM) 820, read only memory (ROM) 822, a peripheral bus 824, and a keyboard controller (KBC) 826. The digital computer 802 can be a personal computer (such as an IBM compatible personal computer, a Macintosh computer or Macintosh compatible computer), a workstation computer (such as a Sun Microsystems or Hewlett-Packard workstation), or some other type of computer.

The microprocessor 816 is a general purpose digital processor, which controls the operation of the computer system 800. The microprocessor 816 can be a single-chip processor or can be implemented with multiple components. Using instructions retrieved from memory, the microprocessor 816 controls the reception and manipulation of input data and the output and display of data on output devices.

The memory bus 818 is used by the microprocessor 816 to access the RAM 820 and the ROM 822. The RAM 820 is used by the microprocessor 816 as a general storage area and as scratch-pad memory, and can also be used to store input data and processed data. The ROM 822 can be used to store instructions or program code followed by the microprocessor 816 as well as other data.

The peripheral bus 824 is used to access the input, output, and storage devices used by the digital computer 802. In the described embodiment, these devices include the display screen 804, the printer device 806, the floppy disk drive 808, the hard disk drive 810, and the network interface 812. The keyboard controller 826 is used to receive input from keyboard 814 and send decoded symbols for each pressed key to microprocessor 816 over bus 828.

The display screen 804 is an output device that displays images of data provided by the microprocessor 816 via the peripheral bus 824 or provided by other components in the computer system 800. The printer device 806, when operating as a printer, provides an image on a sheet of paper or a similar surface. Other output devices such as a plotter, typesetter, etc. can be used in place of, or in addition to, the printer device 806.

The floppy disk drive 808 and the hard disk drive 810 can be used to store various types of data. The floppy disk drive 808 facilitates transporting such data to other computer systems, and hard disk drive 810 permits fast access to large amounts of stored data.

The microprocessor 816, together with an operating system, operates to execute computer code and produce and use data. The computer code and data may reside on the RAM 820, the ROM 822, or the hard disk drive 810. The computer code and data could also reside on a removable program medium and loaded or installed onto the computer system 800 when needed. Removable program media include, for example, CD-ROM, PC-CARD, floppy disk and magnetic tape.

The network interface 812 is used to send and receive data over a network connected to other computer systems. An interface card or similar device and appropriate software implemented by the microprocessor 816 can be used to connect the computer system 800 to an existing network and transfer data according to standard protocols.

The keyboard 814 is used by a user to input commands and other instructions to the computer system 800. Other types of user input devices can also be used in conjunction with the present invention. For example, pointing devices such as a computer mouse, a track ball, a stylus, or a tablet can be used to manipulate a pointer on a screen of a general-purpose computer.

Embodiments of the invention can also be embodied as computer readable code on a computer readable medium. The computer readable medium is any data storage device that can store data, which can be thereafter, be read by a computer system. Examples of the computer readable medium include read-only memory (ROM), random-access memory (RAM), CD-ROMs, magnetic tape, and optical data storage devices. The computer readable medium can also be distributed over a network that couples computer systems so that the computer readable code is stored and executed in a distributed fashion.

Furthermore, the same or similar methods and apparatuses described above for programming a hardware device can also be used for performing other particular maintenance operations on the hardware device. For example, operations such as erasing a ROM, reading a ROM, or performing a checksum on a ROM can be performed.

Although the foregoing embodiments of the invention have been described in some detail for purposes of clarity of understanding, it will be apparent that certain changes and modifications may be practiced within the scope of the appended claims. Accordingly, the present embodiments are to be considered as illustrative and not restrictive, and the invention is not to be limited to the details given herein, but may be modified within the scope of the appended claims.

Embodiments of the invention also provide methods of operating a RTP stack in an apparatus such as a small processing device for example, PDA, mobile phone, set-top box; and processing apparatus for providing a RTP stack.

Embodiments of the invention may be implemented on a programmable processing apparatus such as a computer, or a processor. Methods in accordance with embodiments of the invention may be embodied as computer readable code carried on a carrier medium which could be a transient carrier such as a signal or a storage carrier such as memory. These embodiments may also be embodied as specifically configured apparatus such as an ASIC or a programmable logic gate array.

Embodiments of the invention may also be implemented as manufacturing instructions to process such a specifically configured apparatus. For example this may be a hardware description language code such as a Verilog code which when run on an appropriate manufacturing process specifically configures a configurable apparatus such as an ASIC or programmable logic gate array to implement methods in accordance with embodiments of the invention. Implementation may also take the form of code which dynamically configures reconfigurable apparatus such as re-programmable logic gate arrays to implement embodiments of the invention.

## Claims

1. A Real-Time Protocol (RTP) stack, comprising:
a receiver module capable of receiving data via an underlying transport layer; and
a small device profile that defines a bandwidth fraction for Real-Time Control Protocol (RTCP) control data to be less than five percent.

2. An RTP stack as recited in claim 1, wherein the small device profile defines the bandwidth fraction for the RTCP control data to be zero.

3. An RTP stack as recited in claim 2, wherein the RTP stack does not process RTCP data.

4. An RTP stack as recited in claim 3, wherein the RTP stack comprises less than 150 kilobytes (KB).

5. An RTP stack as recited in claim 3, wherein the RTP stack comprises less than 60 KB.

6. An RTP stack as recited in claim 5, wherein the RTP stack does not transmit RTP data.

7. An RTP stack as recited in claim 1, further comprising a transport-independent tasks module, wherein the transport-independent tasks module includes methods that are independent of the underlying transport layer.

8. An RTP stack as recited in claim 7, further comprising a connector module in communication with the transport-independent module, wherein the connector module includes methods that are dependent on the underlying transport layer.

9. An RTP stack as recited in claim 8, wherein the connector module receives RTP data from the underlying transport layer and provides the RTP data to the transport independent module as an RTP input stream.

10. A Real-Time Protocol (RTP) stack, comprising:
a manager module that manages operations performed by the RTP stack;
a connector module that receives data from an underlying transport layer, the connector module processing the data to create an input stream;
a receiver module in communication with the connector module, the receiver module capable of receiving the input stream from the connector module; and
a small device profile that defines a bandwidth fraction for Real-Time Control Protocol (RTCP) control data to be less than five percent.

11. An RTP stack as recited in claim 10, wherein the small device profile defines the bandwidth fraction for the RTCP control data to be zero.

12. An RTP stack as recited in claim 11, wherein the RTP stack does not process RTCP data.

13. An RTP stack as recited in claim 12, wherein the RTP stack comprises less than 150 kilobytes (KB).

14. An RTP stack as recited in claim 12, wherein the RTP stack comprises less than 60 KB.

15. An RTP stack as recited in claim 10, wherein the RTP stack does not transmit RTP data.

16. A Real-Time Protocol (RTP) stack, comprising:
a transport-independent tasks module, wherein the transport-independent tasks module includes methods that are independent of the underlying transport layer;
a connector module in communication with the transport-independent module, wherein the connector module includes methods that are dependent on the underlying transport layer; and
a small device profile that defines a bandwidth fraction for Real-Time Control Protocol (RTCP) control data to be zero, wherein the RTP stack does not process RTCP data, and wherein the RTP stack does not transmit RTP data.

17. An RTP stack as recited in claim 16, wherein the RTP stack comprises less than 150 kilobytes (KB).

18. An RTP stack as recited in claim 16, wherein the RTP stack comprises less than 60 KB.

19. An RTP stack as recited in claim 16, wherein the connector module receives RTP data from the underlying transport layer and provides the RTP data to the transport independent module as an RTP input stream.

20. An RTP stack as recited in claim 16, wherein the RTP stack is capable of being deployed in a small device having restrictive memory requirements.

21. A carrier medium comprising processor readable code comprising the real time protocol stack of any one of claims 1 to 20.

22. A carrier medium carrying processor readable code for controlling a processing apparatus to provide the real time protocol stack of any one of claims 1 to 20.

23. Processing apparatus configured to provide the real time protocol stack of any one of claims 1 to 20.

24. A method of operating a Real-Time Protocol (RTP) stack, comprising:
providing a receiver module capable of receiving data via an underlying transport layer; and
providing a small device profile that defines a bandwidth fraction for Real-Time Control Protocol (RTCP) control data to be less than five percent.

25. A method as recited in claim 24, wherein the small device profile defines the bandwidth fraction for the RTCP control data to be zero.

26. A method as recited in claim 24 or 25, wherein the RTP stack does not process RTCP data.

27. A method as recited in any one of claims 24 to 27, wherein the RTP stack comprises less than 150 kilobytes (KB).

28. A method as recited in claim 27, wherein the RTP stack comprises less than 60 KB.

29. A method as recited in any one of claims 24 to 28, wherein the RTP stack does not transmit RTP data.

30. A method as recited in any one of claims 24 to 30, further comprising providing a transport-independent tasks module, wherein the transport-independent tasks module includes methods that are independent of the underlying transport layer.

31. A method as recited in claim 30, further comprising providing a connector module in communication with the transport-independent module, wherein the connector module includes methods that are dependent on the underlying transport layer.

32. A method as recited in claim 31, wherein the connector module receives RTP data from the underlying transport layer and provides the RTP data to the transport independent module as an RTP input stream.

33. A method of operating a Real-Time Protocol (RTP) stack, comprising:
providing a manager module that manages operations performed by the RTP stack;
providing a connector module that receives data from an underlying transport layer, the connector module processing the data to create an input stream;
providing a receiver module in communication with the connector module, the receiver module capable of receiving the input stream from the connector module; and
providing a small device profile that defines a bandwidth fraction for Real-Time Control Protocol (RTCP) control data to be less than five percent.

34. A method as recited in claim 33, wherein the small device profile defines the bandwidth fraction for the RTCP control data to be zero.

35. A method as recited in claim 33 or 34, wherein the RTP stack does not process RTCP data.

36. A method as recited in any one of claims 33 to 35, wherein the RTP stack comprises less than 150 kilobytes (KB).

37. A method as recited in claim 36, wherein the RTP stack comprises less than 60 KB.

38. A method as recited in any one of claims 33 to 37, wherein the RTP stack does not transmit RTP data.

39. A method of operating a Real-Time Protocol (RTP) stack, comprising:
providing a transport-independent tasks module, wherein the transport-independent tasks module includes methods that are independent of the underlying transport layer;
providing a connector module in communication with the transport-independent module, wherein the connector module includes methods that are dependent on the underlying transport layer; and
providing a small device profile that defines a bandwidth fraction for Real-Time Control Protocol (RTCP) control data to be zero, wherein the RTP stack does not process RTCP data, and wherein the RTP stack does not transmit RTP data.

40. A method as recited in claim 39, wherein the RTP stack comprises less than 150 kilobytes (KB).

41. A method as recited in claim 40, wherein the RTP stack comprises less than 60 KB.

42. A method as recited in any one of claims 39 to 41, wherein the connector module receives RTP data from the underlying transport layer and provides the RTP data to the transport independent module as an RTP input stream.

43. A method as recited in any one of claims 39 to 42, wherein the RTP stack is capable of being deployed in a small device having restrictive memory requirements.

44. A carrier medium carrying processor readable code for controlling a processing apparatus to carry out the method of any one of claims 24 to 43.

45. A processing apparatus configured to carry out the method of any one of claims 24 to 43.

46. A processing apparatus for providing a Real-Time Protocol (RTP) stack, comprising:
means for providing a receiving module capable of receiving data via an underlying transport layer; and
means for providing a small device profile that defines a bandwidth fraction for Real-Time Control Protocol (RTCP) control data to be less than five percent.

47. An apparatus as recited in claim 46, wherein the small device profile defines the bandwidth fraction for the RTCP control data to be zero.

48. An apparatus as recited in claim 46 or 47, wherein the RTP stack does not process RTCP data.

49. An apparatus as recited in any one of claims 46 to 48, wherein the RTP stack comprises less than 150 kilobytes (KB).

50. An apparatus as recited in claim 49, wherein the RTP stack comprises less than 60 KB.

51. An apparatus as recited in any one of claims 46 to 50, wherein the RTP stack does not transmit RTP data.

52. An apparatus as recited in any one of claims 46 to 51, further comprising means for providing a transport-independent tasks module, wherein the transport-independent tasks module includes methods that are independent of the underlying transport layer.

53. An apparatus as recited in claim 52, further comprising means for providing a connector module in communication with the transport-independent module, wherein the connector module includes methods that are dependent on the underlying transport layer.

54. An apparatus as recited in claim 53, wherein the connector module receives RTP data from the underlying transport layer and provides the RTP data to the transport independent module as an RTP input stream.

55. A processing apparatus for providing a Real-Time Protocol (RTP) stack, comprising:
means for providing a manager module that manages operations performed by the RTP stack;
means for providing a connector module that receives data from an underlying transport layer, the connector module processing the data to create an input stream;
means for providing a receiver module in communication with the connector module, the receiver module capable of receiving the input stream from the connector module; and
means for providing a small device profile that defines a bandwidth fraction for Real-Time Control Protocol (RTCP) control data to be less than five percent.

56. An apparatus as recited in claim 55, wherein the small device profile defines the bandwidth fraction for the RTCP control data to be zero.

57. An apparatus as recited in claim 55 or 56, wherein the RTP stack does not process RTCP data.

58. An apparatus as recited in any one of claims 55 to 57, wherein the RTP stack comprises less than 150 kilobytes (KB).

59. An apparatus as recited in claim 58, wherein the RTP stack comprises less than 60 KB.

60. An apparatus as recited in any one of claims 55 to 59, wherein the RTP stack does not transmit RTP data.

61. A processing apparatus for providing a Real-Time Protocol (RTP) stack, comprising:
means for providing a transport-independent tasks module, wherein the transport-independent tasks module includes methods that are independent of the underlying transport layer;
means for providing a connector module in communication with the transport-independent module, wherein the connector module includes methods that are dependent on the underlying transport layer; and
means for providing a small device profile that defines a bandwidth fraction for Real-Time Control Protocol (RTCP) control data to be zero, wherein the RTP stack does not process RTCP data, and wherein the RTP stack does not transmit RTP data.

62. An apparatus as recited in claim 61, wherein the RTP stack comprises less than 150 kilobytes (KB).

63. An apparatus as recited in claim 62, wherein the RTP stack comprises less than 60 KB.

64. An apparatus as recited in any one of claims 61 to 63, wherein the connector module receives RTP data from the underlying transport layer and provides the RTP data to the transport independent module as an RTP input stream.

65. An apparatus as recited in any one of claims 61 to 64, wherein the RTP stack is capable of being deployed in a small device having restrictive memory requirements.
